# EUROPÄISCHE PATENTSCHRIFT

(11) **EP 2 918 439 B1**
(45) Veröffentlichungstag und Bekanntmachung des Hinweises auf die Patenterteilung: **18.09.2019**
(21) Anmeldenummer: 15155560.4
(22) Anmeldetag: 18.02.2015
(51) Int. Cl.: B60K 31/00, B60W 40/02, B60W 50/00

(54) **Verfahren zum Betreiben eines Fahrzeugs und Fahrerassistenzsystem**
Method for operating a vehicle and driver assistance system
Procédé de fonctionnement d'un véhicule et système d'assistance du conducteur

(30) Priorität: 10.03.2014 DE 102014204354
(43) Veröffentlichungstag der Anmeldung: 16.09.2015
(73) Patentinhaber: ROBERT BOSCH GMBH, 70442 Stuttgart (DE)
(72) Erfinder: Selem, Moez, 30625 Hannover (DE); Poechmueller, Werner, 31139 Hildesheim (DE)

(56) Entgegenhaltungen:
- WO-A1-2013/095237
- DE-A1- 10 323 722
- DE-A1-102009 030 784
- Thierno Diallo ET AL: "Etude et illustration de méthodes itératives d'optimisation non linéaire", , 1. April 2006 (2006-04-01), XP055266361, Gefunden im Internet: URL:http://infoscience.epfl.ch/record/8950 7/files/diallo_master.pdf [gefunden am 2016-04-18]

## Beschreibung

Die Erfindung betrifft ein Verfahren zum Betreiben eines Fahrzeugs. Die Erfindung betrifft ferner ein Computerprogrammprodukt sowie ein Fahrerassistenzsystem.

### Stand der Technik

Aus der Offenlegungsschrift DE 103 45 319 A1 ist ein Verfahren zum Steuern des Betriebs eines Fahrzeugs bekannt. Dort wird eine analytische Fahrzeugbetriebskostenfunktion auf Basis mehrerer Umgebungsparameter, Fahrzeugparameter, Fahrzeugbetriebsparameter und Streckenparameter definiert. Es werden Fahrzeugsteuerparameter iterativ berechnet und gespeichert, die die Fahrzeugbetriebskostenfunktion für eine vorher bestimmte Entfernung entlang der vor dem Fahrzeug liegenden Strecke als eine Funktion zumindest der Fahrzeuggeschwindigkeit, der Fahrzeugposition und der in der Straßenkarte gespeicherten Streckenparameter minimieren. Anschließend werden optimierte Fahrzeugsteuerparameter ausgelesen, die einer gegenwärtigen Position des Fahrzeugs entsprechen. Der Fahrzeugbetrieb wird auf Basis der optimierten Fahrzeugsteuerparameter gesteuert.

Die Offenlegungsschrift DE 10 2009 030 784 A1 zeigt ein Verfahren zum Steuern des Betriebs eines Fahrzeugs. Das bekannte Verfahren sieht ein Bereitstellen einer Fahrzeugbetriebskostenfunktion vor sowie ein Steuern des Fahrzeugs in Abhängigkeit von einer Lösung der Fahrzeugbetriebskostenfunktion.

Das Dokument "Thierno Diallo ET AL: "Etude et illustration de methodes iteratives d'optimisation non lineaire", 1. April 2006 (2006-04-01), XP055266361, Gefunden im Internet: URL: http://infoscience.epfl.ch/record/89507/files/diallo_master.pdf [gefunden am 2016-04-18]" zeigt ein Newton-Verfahren zum Lösen einer hochdimensionalen Funktion.

### Offenbarung der Erfindung

Die der Erfindung zugrunde liegende Aufgabe kann daher darin gesehen werden, ein verbessertes Verfahren zum Betreiben eines Fahrzeugs bereitzustellen.

Die der Erfindung zugrunde liegende Aufgabe kann auch darin gesehen werden, ein entsprechendes Computerprogrammprodukt anzugeben.

Die der Erfindung zugrunde liegende Aufgabe kann des Weiteren darin gesehen werden, ein entsprechendes Fahrerassistenzsystem bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Betreiben eines Fahrzeugs bereitgestellt, umfassend die folgenden Schritte: Bereitstellen einer mehrdimensionalen analytischen Fahrzeugbetriebskostenfunktion, die eine Abhängigkeit eines Verbrauchs einer Fahrzeugantriebsenergie von einer vor dem Fahrzeug vorausliegenden Fahrstrecke oder einer vor dem Fahrzeug vorausliegenden Fahrzeit sowie von mehreren Stellgrößen definiert, Berechnen eines Verlaufs einer Stellgröße der mehreren Stellgrößen, wobei der Verlauf die Fahrzeugbetriebskostenfunktion für die vorausliegende Fahrstrecke oder für die vorausliegende Fahrzeit minimiert, wobei für die Berechnung des Verlaufs die restlichen Stellgrößen konstant gehalten werden, wiederholtes Berechnen von weiteren jeweiligen Verläufen der mehreren Stellgrößen, wobei der jeweilige Verlauf einer Stellgröße der mehreren Stellgrößen die Fahrzeugbetriebskostenfunktion für die vorausliegende Fahrstrecke oder für die vorausliegende Fahrzeit minimiert, wobei für die Berechnung des jeweiligen Verlaufs die Stellgrößen gemäß den zuvor entsprechend berechneten Verläufen vorgegeben sind und die restlichen Stellgrößen konstant gehalten werden, Steuern des Fahrzeugs in Abhängigkeit der berechneten jeweiligen Verläufe der mehreren Stellgrößen, während das Fahrzeug die Fahrstrecke befährt oder während die Fahrzeit abläuft.

Gemäß einem anderen Aspekt wird ein Computerprogrammprodukt bereitgestellt mit Programmcodemitteln zur Durchführung des Verfahrens zum Betreiben eines Fahrzeugs, wenn das Computerprogrammprodukt auf einer Verarbeitungseinrichtung abläuft oder auf einem computerlesbaren Datenträger gespeichert ist.

Nach noch einem Aspekt wird ein Fahrerassistenzsystem mit einer Verarbeitungseinrichtung bereitgestellt, die dazu eingerichtet ist, das Verfahren zum Betreiben eines Fahrzeugs durchzuführen.

Die Erfindung umfasst also insbesondere den Gedanken, anstatt eine Suche eines globalen Minimums der Fahrzeugbetriebskostenfunktion in n Dimensionen (n = Anzahl der Stellgrößen) durchzuführen, nur noch n-1 Suchen eines lokalen Minimums in zwei Dimensionen durchzuführen. Denn während der Verlauf einer Stellgröße der mehreren Stellgrößen berechnet wird, der die Fahrzeugbetriebskostenfunktion für die vorausliegende Fahrstrecke oder für die vorausliegende Fahrzeit minimiert, werden die restlichen Stellgrößen konstant gehalten. Ferner werden die Stellgrößen, für die zuvor bereits ein entsprechender Verlauf berechnet wurde, gemäß diesen zuvor berechneten Verläufen vorgegeben. Somit reduziert sich eine Suche nach dem Minimum der Fahrzeugbetriebskostenfunktion für eine Stellgröße auf eine entsprechende Suche im zweidimensionalen Raum. Dadurch kann in vorteilhafter Weise ein Rechenaufwand, eine Rechenzeit und/oder eine hierfür benötigte Rechenkapazität (und/oder Speicherkapazität) reduziert werden. Dies ist insbesondere für Echtzeitanwendungen besonders wichtig. Somit kann also ein Antriebsenergieverbrauch minimiert werden bei gleichzeitigem Sparen von Rechenzeit. Eine Echtzeitanwendung kann somit in vorteilhafter Weise bewirkt sein.

Eine Fahrzeugantriebsenergie im Sinne der vorliegenden Erfindung kann insbesondere als elektrische Energie vorliegen. Die Fahrzeugantriebsenergie im Sinne der vorliegenden Erfindung kann beispielsweise zusätzlich oder anstelle als chemische Antriebsenergie, beispielsweise als Kraftstoff (zum Beispiel: Benzin, Diesel, Gas), vorliegen.

Nach einer Ausführungsform, die nicht Teil der Erfindung ist, kann vorgesehen sein, dass eine Reihenfolge einer Abarbeitung der Dimensionen der hochdimensionalen oder mehrdimensionalen Fahrzeugbetriebskostenfunktion, in welcher die Verläufe berechnet werden, fest vorgegeben wird. Das heißt also insbesondere, dass fest vorgegeben wird, in welcher Dimension zuerst der Verlauf berechnet wird, der die Fahrzeugbetriebskostenfunktion in dieser Dimension minimiert, und welche Dimensionen dann folgen für die Berechnung des Verlaufs.

Dadurch ist in vorteilhafter Weise eine einfache und schnelle Berechnung ermöglicht. Es müssen beispielsweise keine Berechnungen mehr hinsichtlich einer optimalen Reihenfolge angestellt werden. Diese können beispielsweise zu einem früheren Zeitpunkt bereits durchgeführt worden sein und liegen nun als verwendbares Ergebnis vor. Beispielsweise kann diese Reihenfolge fest in einem Speicher im Fahrzeug abgespeichert sein.

Erfindungsgemäß ist vorgesehen, dass eine Reihenfolge, in welcher die Verläufe berechnet werden, abhängig von zumindest einem Parameter vorgegeben wird.

Die Parametrisierung erlaubt in vorteilhafter Weise eine flexible Anpassung an verschiedene Situationen. So kann beispielsweise ein eventueller Zeitverlust beim Finden der optimalen Reihenfolge dadurch kompensiert werden, dass die folgenden und darauf aufbauenden Berechnungen schneller und effizienter durchgeführt werden können.

Nach einer anderen Ausführungsform kann vorgesehen sein, dass abhängig von einem weiteren Parameter ermittelt wird, für welche Stellgrößen ein entsprechender Verlauf berechnet wird und für welche nicht.

Somit müssen in vorteilhafter Weise nicht in jeder Situation sämtliche Verläufe berechnet werden. Die Parametrisierung erlaubt somit eine flexible Anpassung an verschiedene Situationen. Dies kann in vorteilhafter Weise eine hierfür benötigte Rechenkapazität verringern. Insbesondere kann eine Rechenzeit verringert werden.

Nach noch einer Ausführungsform kann vorgesehen sein, dass der Parameter und der weitere Parameter aus der folgenden Gruppe von Stellgrößen ausgewählt werden: Fahrzeuggeschwindigkeit, Getriebezustand, Gang, Ladungszustand einer Fahrzeugbatterie, Lastaufteilung zwischen einem Verbrennungs- und einem Elektromotor bei einem Hybridfahrzeug, Straßenklasse, Steigung, Gefälle, Ort, Fahrzeugmasse, Verkehrsfluss, Gewichtungsfaktoren, die jeweils definieren welche Stellgrößenvariation welche Auswirkung auf die Fahrzeugbetriebskostenfunktion aufweist.

Gemäß einer anderen Ausführungsform kann vorgesehen sein, dass der Parameter und/oder der weitere Parameter von einem Navigationssystem bereitgestellt werden.

Somit kann in vorteilhafter Weise ein Navigationssystem besonders effizient und effektiv genutzt werden. Denn es bietet eine Doppelfunktion an: eine Navigation des Fahrzeugs und ein Bereitstellen der Parameter.

Nach noch einer Ausführungsform kann vorgesehen sein, dass der Schritt des Bereitstellens folgenden Schritt umfasst: Berechnen des Verbrauchs der Fahrzeugantriebsenergie ausschließlich für diejenigen Werte der Stellgrößen, die plausibel zu einem vorgegebenen physikalischen Fahrzeugmodell und/oder zu einem vorgegebenen physikalischen Umgebungsmodell sind.

Somit muss nicht für Werte der Stellgrößen, die physikalisch keinen Sinn ergeben können, ein Verbrauch berechnet werden. Wenn beispielsweise das Fahrzeug 100 km/h fährt, so muss nicht ein Verbrauch für eine Fahrzeuggeschwindigkeit von 10 km/h für die nächsten 10 m berechnet werden, da ein Fahrzeug so schnell in der Regel nicht bremsen kann. Analog gilt dies insbesondere für eine Beschleunigung. So wird beispielsweise ein Fahrzeug, welches 10 km/h fährt, in den nächsten 10 m nicht auf 100 km/h beschleunigen können. In diesem Fall ist es nicht notwendig, einen entsprechenden Verbrauch an Fahrzeugantriebsenergie des Fahrzeugs bei einer Geschwindigkeit von 100 km/h für die nächsten 10 m der vorausliegenden Fahrstrecke zu berechnen.

Nach einer weiteren Ausführungsform kann vorgesehen sein, dass der Schritt des Bereitstellens folgenden Schritt umfasst: Durchführen einer Berechnung des Verbrauchs der Fahrzeugantriebsenergie für die Werte der Stellgröße, deren Verlauf momentan für die Minimierung der Fahrzeugbetriebskostenfunktion berechnet werden soll, erst dann, wenn definiert ist, welcher Verlauf momentan berechnet werden soll.

Es kann somit in vorteilhafter Weise mit einer leeren Fahrzeugbetriebskostenfunktion gestartet werden. Die entsprechenden Werte werden erst bei Bedarf berechnet. Dies kann in vorteilhafter Weise einen Speicherbedarf verringern.

Die Fahrzeugbetriebskostenfunktion im Sinne der vorliegenden Erfindung definiert also eine Abhängigkeit eines Verbrauchs einer Fahrzeugantriebsenergie von einer vor dem Fahrzeug vorausliegenden Fahrstrecke sowie von mehreren Stellgrößen. Insbesondere definiert die Fahrzeugbetriebskostenfunktion eine Abhängigkeit eines Verbrauchs einer Fahrzeugantriebsenergie von einer vor dem Fahrzeug vorausliegenden Fahrzeit sowie von mehreren Stellgrößen. In einer grafischen Darstellung definiert die Fahrzeugbetriebskostenfunktion somit insbesondere eine Kostenkarte, wobei jedem Punkt der Kostenkarte abhängig von den Stellgrößen ein entsprechender Verbrauch einer Fahrzeugantriebsenergie zugeordnet ist. Im Folgenden können daher die Begriffe "Fahrzeugbetriebskostenfunktion" und "Kostenkarte" synonym verwendet werden.

Eine Stellgröße kann beispielsweise eine Stellgröße ausgewählt aus der folgenden Gruppe von Stellgrößen sein: Fahrzeuggeschwindigkeit, Getriebezustand, Gang, Ladungszustand einer Fahrzeugbatterie, Lastaufteilung zwischen einem Verbrennungs- und einem Elektromotor bei einem Hybridfahrzeug, Straßenklasse, Steigung, Gefälle, Ort, Fahrzeugmasse, Verkehrsfluss, Gewichtungsfaktoren, die jeweils definieren welche Stellgrößenvariation welche Auswirkung auf die Fahrzeugbetriebskostenfunktion aufweist.

Die Erfindung wird im Folgenden anhand von bevorzugten Ausführungsbeispielen näher erläutert. Hierbei zeigen
Figur 1 eine zweidimensionale Kostenkarte,
Figur 2 eine dreidimensionale Kostenkarte,
Figur 3 ein Ablaufdiagramm eines Verfahrens zum Betreiben eines Fahrzeugs,
Figur 4 ein Ablaufdiagramm eines weiteren Verfahrens zum Betreiben eines Fahrzeugs und
Figur 5 ein Fahrerassistenzsystem.

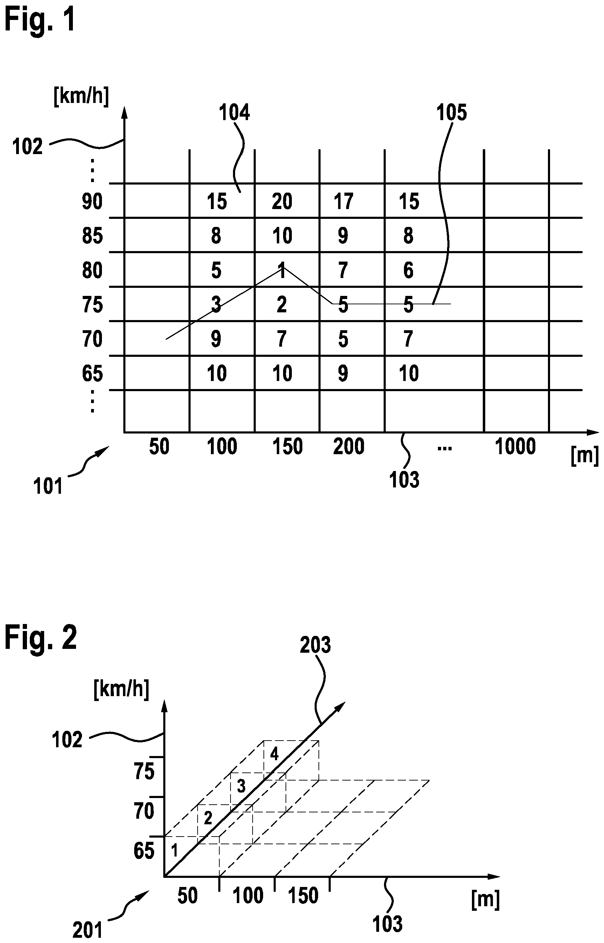

Figur 1 zeigt eine zweidimensionale Kostenkarte 101.

Auf der Abszisse 103 sind Ortspositionen vor dem Fahrzeug, auf der Ordinate 102 mögliche Fahrgeschwindigkeiten des Fahrzeugs aufgetragen. Mittels einer Fahrzeugbetriebskostenfunktion wird ein Verbrauch einer Fahrzeugantriebsenergie 104 in der Kostenkarte in Abhängigkeit von Stellgrößen, hier die Geschwindigkeit des Fahrzeugs (Fahrgeschwindigkeit) und den Ortspositionen, ermittelt. Der Einsatz eines Optimierungsverfahrens dient der Ermittelung des Verlaufs des minimalen Verbrauchs. Dies ist beispielhaft anhand eines Polygons 105 dargestellt. Nun kann für das Polygon 105 der optimale Verlauf der Fahrzeuggeschwindigkeit über dem Ort abgelesen werden, der zu einem minimalen Verbrauch an Fahrzeugantriebsenergie führt (im Beispiel der Figur 1: 75 km/h bei 100 m, 80 km/h bei 150 m, 75 km/h bei 200 m, 75 km/h bei 250 m).

Figur 2 zeigt eine dreidimensionale Kostenkarte 201.

Im Vergleich zu der Kostenkarte 101 gemäß Figur 1 wurde eine weitere Dimension 203 (eine Stellgröße entspricht allgemein einer Dimension) hinzugefügt. Im vorliegenden Beispiel entspricht diese weitere Dimension 203 einem eingelegten Gang eines Getriebes des Fahrzeugs. Die Anzahl der Kostenelemente (Elemente der Kostenkarte, also Verbrauchswerte) wird mit jeder hinzugefügten Dimension um ein Mehrfaches höher (zum Beispiel vervierfacht sich diese bei Hinzufügen von 4 diskreten Gängen wie in Figur 2 dargestellt). Damit vervielfacht sich zum einen der Aufwand für das Bestimmen der Verbrauchswerte als auch der Aufwand für das Finden des Verlaufs des Kostenminimums in der Karte (= Lösung des Optimierungsproblems). Somit werden auch der Speicheraufwand für das Speichern der Kostenkarte in einem Gerät und der Rechenzeitaufwand für das Bestimmen der Verbrauchswerte und das Finden eines Optimums entsprechend ansteigen.

Eine Lösung des entstehenden Aufwandsproblems besteht insbesondere darin, dass man kein globales Optimum über die gesamte, hochdimensionale Kostenkarte ermittelt, sondern ein lokales Optimum, separiert entlang der Dimensionen der Einflussgrößen (Stellgrößen). Ein vorteilhaftes Vorgehen umfasst insbesondere, dass man die Verbrauchswerte für die gesamte Karte innerhalb des hochdimensionalen Kostenraumes ermittelt (Berechnen aller Kostenelemente). Danach sucht man in der Optimierungsphase nacheinander entlang der einzelnen Einflussgrößen/Stellgrößen. Im Beispiel der Figur 2 könnte man zum Beispiel erst nur das Optimum bezüglich der Stellgröße "Geschwindigkeit" bei konstantem Gang suchen (zum Beispiel wird der Gang auf den bei der jeweiligen Geschwindigkeit physikalisch höchstmöglichen Gang festgelegt; es wird also insbesondere der Verlauf berechnet für diejenigen Stellgrößen, die plausibel zu einem vorgegebenen physikalischen Fahrzeugmodell und/oder zu einem vorgegebenen physikalischen Umgebungsmodell sind.). Ist der Geschwindigkeitsverlauf über dem Ort somit bestimmt (Kriterium geringstmögliche Summe der entsprechenden Verbrauchswerte), wird nur für den bereits ermittelten Geschwindigkeitsverlauf eine Variation der Gänge untersucht mit dem Ziel festzustellen, ob bei gegebenem Geschwindigkeitsverlauf eine Gangwahlvariation existiert, die zu einer weiteren Reduktion der Summe der Verbrauchswerte in der Kostenkarte führt. Man führt somit nacheinander zwei zweidimensionale Optimierungsvorgänge durch anstatt eines Suchvorgangs im dreidimensionalen Raum. Dies reduziert den Aufwand für den Optimierungsvorgang beträchtlich, insbesondere wenn die Stellgrößen einen hochdimensionalen Raum aufspannen.

Eine weitere vorteilhafte Ausgestaltung ergibt sich insbesondere, wenn man nicht nur den Suchvorgang für die Bestimmung des optimalen Kostenverlaufs in dieser Art entlang der Achsen der Kostenkarte sequenzialisiert, sondern auch das Befüllen der Kostenkarte selbst. Im Beispiel von Figur 2 würde man dabei zum Beispiel zuerst diejenigen Kostenelemente der Kostenkarte 201 befüllen, um die Verbrauchswerte für die verschiedenen Geschwindigkeiten über dem Ort bei konstantem Gang zu ermitteln. Dabei füllt man nur diejenigen Elemente (Verbrauchswerte) der Kostenkarte 201, die alle Geschwindigkeiten über dem Ort bei maximal für die jeweilige Geschwindigkeit sinnvoll einlegbarem Gang entsprechen. Danach wird der kostenoptimale Geschwindigkeitsverlauf über dem Ort bestimmt. Nachdem der optimale Geschwindigkeitsverlauf bestimmt wurde, wird dieser festgehalten und in der Kostenkarte die Kostenelemente für diesen festen Geschwindigkeitsverlauf unter Variation der Gänge vervollständigt und danach ein weiteres Mal nach dem optimalen Verlauf der Gänge bei gegebenem Geschwindigkeitsverlauf gesucht. Somit wird auch der Aufwand für das Berechnen und Befüllen der Kostenkarte beträchtlich reduziert (je hochdimensionaler der Kostenraum, desto größer die Aufwandsreduktion).

In einer weiteren sinnvollen Ausgestaltung erfolgt die Optimierung und/oder das Befüllen der Kostenkarte insbesondere in einer bestimmten Reihenfolge, derart, dass zuerst die Stellgröße optimiert wird, bei der das maximale Einsparpotenzial in den Betriebskosten erwartet wird, danach die Optimierung der Stellgröße, in der das zweitgrößte Einsparpotenzial vermutet wird und so fort in Richtung abnehmenden erwarteten Einsparpotenzials. Diese Abarbeitung des Optimierungsprozesses kann in fester Reihenfolge zum Beispiel in Form einer Tabelle im Speicher des zur Optimierung genutzten Rechners (Verarbeitungseinrichtung) abgelegt sein (zum Beispiel immer zuerst Optimierung der Fahrgeschwindigkeit, danach Optimierung des Ganges, danach Optimierung des Ladungszustandes einer Batterie in einem Hybridelektrofahrzeug (HEV)).

In einer weiteren bevorzugten Ausgestaltung kann beispielsweise die Reihenfolge der Optimierung abhängig von Parametern geändert werden. Solche Parameter können zum Beispiel Umgebungszustände und/oder Stellgrößen sein, wie die erwarteten Steigungen auf einem Streckenabschnitt und/oder die erwartete Fahrgeschwindigkeit auf einem Streckenabschnitt oder die erwartete Straßenklasse (zum Beispiel: Autobahn, Landstraße, Bundesstraße, verkehrsberuhigte Zone, Spielstraße) auf einem Streckenabschnitt. Diese Parameter können zum Beispiel von einem Navigationssystem bereitgestellt werden. So kann es sein, dass man auf einer Autobahn in einer flachen Region ohne Steigungen/Gefälle, auf der mit hoher Geschwindigkeit relativ kontinuierlich gefahren wird, eine andere Optimierungsreihenfolge der Stellgrößen bevorzugt als auf einer niederwertigen Straßenklasse in einem Gebiet mit vielen Steigungen und Gefällen. So könnte man auf der Autobahn in flachem Gelände auf die Optimierung des Ladungszustandes der Batterie sogar vollständig verzichten, da man in der Praxis kaum oder keine Energie rekuperieren können wird. Dies sieht ganz anders in einer hügeligen Region auf niedrigen Straßenklassen aus, auf denen man relativ langsam fahren wird, hier ist die Berücksichtigung der Rekuperation elektrischer Energie in einer Fahrstrategie sinnvoll. Die Optimierung des Ladungszustandes wird somit nach oben in der Liste rutschen.

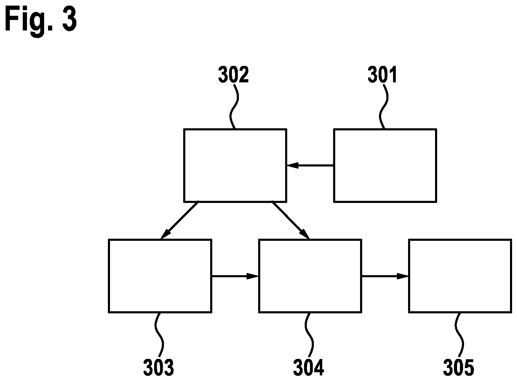

Figur 3 zeigt den Ablauf einer Ausführungsform eines Verfahrens zum Betreiben eines Fahrzeugs, wobei das Verfahren mehrere der vorangehend beschriebenen beispielhaften Ausgestaltungen umfasst. Zuerst werden in einem Schritt 301 Fahrzeugzustands- oder Umgebungszustandsparameter ermittelt. Sinnvolle Umgebungszustandsparameter sind zum Beispiel die Straßenklasse, auf der sich das Fahrzeug bewegt oder das Höhen-/Steigungsprofil der vorausliegenden Straße. Beispiele für sinnvolle Fahrzeugzustandsparameter sind zum Beispiel der Füllstand der Batterieladung in einem PHEV (= Plug-In Hybrid-Fahrzeug; da die Befüllung der Batterie an der Steckdose für ein PHEV sehr preiswert ist) oder die Beladungsmasse eines Kraftfahrzeugs. Diese Zustandsparameter werden genutzt, um in einem Schritt 302 die Steuerung der Reihenfolge respektive die Anwendung der Fahrzeugbetriebskostenfunktion und/oder des Optimierungsverfahrens vorzunehmen. Daraufhin wird in einem Schritt 303 zuerst die Kostenkarte zur Lösung des Optimierungsproblems erstellt, welche nachfolgend im Schritt 304 mittels eines Optimierungsverfahrens bearbeitet wird. Das Ergebnis des Schritts 304 ist eine über dem Ort oder über der Zeit variable Abfolge von Stellgrößen (zum Beispiel Fahrzeuggeschwindigkeit, Gangwahl, Lastverteilung Elektromotor/Verbrennungsmotor im HEV), welche ein lokales Optimum in der Kostenkarte (aus Schritt 303) darstellen und im Schritt 305 im Fahrzeug umgesetzt werden (zum Beispiel in Form einer automatisierten Sollgeschwindigkeitsvorgabe in einem Tempomaten).

In einer weiteren beispielhaften Ausgestaltung erfolgt die Berechnung der Betriebsstrategiekosten in einer Kostenkarte (wie in Figur 1 oder 2) nicht vollständig vor dem Ablauf der Optimierungsstrategie (Suche nach dem kostenoptimalen Pfad in der Kostenkarte). Um den Rechenaufwand (gegebenenfalls auch Speicheraufwand) weiter zu reduzieren, wird das Optimierungsverfahren mit einer leeren Kostenkarte gestartet. Sobald das Optimierungsverfahren während seiner Suche nach dem kostenoptimalen Pfad einen Eintrag in der Kostenkarte "besucht", wird die Fahrzeugbetriebskostenfunktion aufgerufen, um die Kosten an der betreffenden Stelle zu errechnen und in die Kostenkarte einzutragen. Somit wird der Aufwand für die Berechnung derjenigen Stellen in der Kostenkarte eingespart, die das Optimierungsverfahren nie jemals "besucht".

Eine weitere beispielhafte Ausgestaltung besteht darin, dass nicht nur wie im Ablauf in Figur 3 dargestellt, eine feste, anhand externer Parameter 301 gesteuerte Abfolge der Optimierungsrichtungen 302 durchgeführt wird. Vorzugsweise kann vorgesehen sein, dass nacheinander eine unabhängige Optimierung, zum Beispiel in Richtung der Stellgröße Fahrgeschwindigkeit, der Stellgröße Gangwahl und der Stellgröße Ladungszustand der Batterie (sowie weiterer Einflussgrößen), erfolgt. Wurden die unterschiedlichen unabhängigen Stellgrößenoptimierungen für ein festes, vorausliegendes Fahrstreckensegment durchgeführt, wird bewertet, welche der Stellgrößenvariationen die größten Auswirkungen auf die Fahrzeugbetriebskostenfunktion hatte. Diese werden in eine Reihenfolge mit abnehmendem Beitrag sortiert. Danach erfolgt eine gemeinsame Optimierung gemäß dem Verfahren nach Figur 3 in der ermittelten Reihenfolge. Somit wird die in Figur 3 dargestellte Steuerung der Reihenfolge der Anwendungen 302 abhängig vom Ergebnis einer unabhängigen Durchführung der Optimierung der Stellgrößen 304.

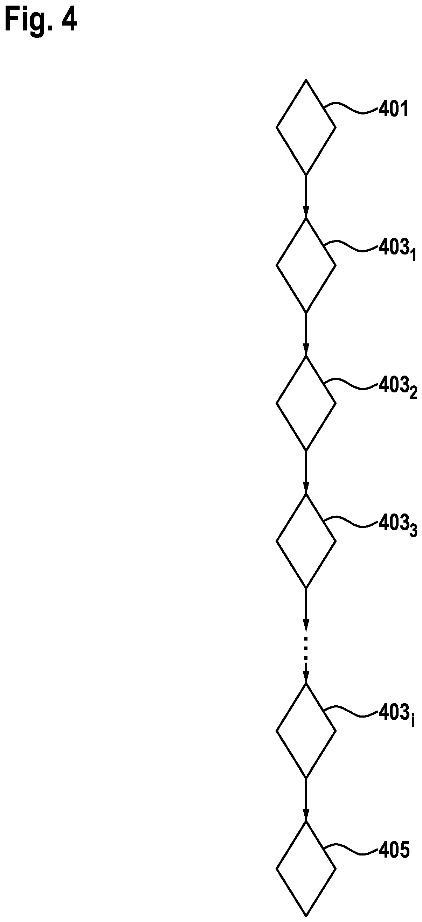

Figur 4 zeigt ein weiteres Ablaufdiagramm eines Verfahrens zum Betreiben eines Fahrzeugs.

Gemäß einem Schritt 401 wird eine mehrdimensionale analytische Fahrzeugbetriebskostenfunktion bereitgestellt, die eine Abhängigkeit eines Verbrauchs einer Fahrzeugantriebsenergie von einer vor dem Fahrzeug vorausliegenden Fahrstrecke oder einer vor dem Fahrzeug vorausliegenden Fahrzeit sowie von mehreren Stellgrößen definiert.

Gemäß einem Schritt 403₁ wird ein Verlauf einer ersten Stellgröße der mehreren Stellgrößen berechnet, wobei der Verlauf die Fahrzeugbetriebskostenfunktion für die vorausliegende Fahrstrecke oder für die vorausliegende Fahrzeit minimiert, wobei für die Berechnung des Verlaufs die restlichen Stellgrößen konstant gehalten werden.

In einem Schritt 403₂ wird ein Verlauf einer zweiten Stellgröße der mehreren Stellgrößen berechnet, wobei der Verlauf der zweiten Stellgröße die Fahrzeugbetriebskostenfunktion für die vorausliegende Fahrstrecke oder für die vorausliegende Fahrzeit minimiert, wobei für die Berechnung des Verlaufs der zweiten Stellgröße die erste Stellgröße gemäß dem in Schritt 403₁ berechneten Verlauf vorgegeben ist und die restlichen Stellgrößen konstant gehalten werden.

In einem Schritt 403₃ wird ein Verlauf einer dritten Stellgröße der mehreren Stellgrößen berechnet, wobei der Verlauf dieser dritten Stellgröße die Fahrzeugbetriebskostenfunktion für die vorausliegende Fahrstrecke oder für die vorausliegende Fahrzeit minimiert, wobei für die Berechnung des Verlaufs der dritten Stellgröße die erste Stellgröße gemäß dem in Schritt 403₁ berechneten Verlauf vorgegeben ist, wobei die zweite Stellgröße gemäß dem in Schritt 403₂ berechneten Verlauf vorgegeben ist und wobei die restlichen Stellgrößen konstant gehalten werden.

Der Schritt 403₃ wiederholt sich entsprechend für die vierte, fünfte und die weiteren Stellgrößen analog. Es endet also in einem Schritt 403ᵢ, wobei in diesem Schritt der Verlauf der i-ten Stellgröße berechnet wird. Hierbei ist i eine natürliche Zahl ausschließlich größer (>) 2. Insbesondere kann vorgesehen sein, dass für sämtliche Stellgrößen entsprechende Verläufe berechnet werden. i ist in diesem Fall die Anzahl der Stellgrößen. Vorzugsweise kann vorgesehen sein, dass nicht für sämtliche Stellgrößen entsprechende Verläufe berechnet werden. i ist in diesem Fall ausschließlich kleiner (<) der Anzahl der Stellgrößen.

Erfindungsgemäß ist vorgesehen, dass die Reihenfolge, in welcher die Verläufe gemäß den Schritten 403₁ bis 403ᵢ berechnet werden, abhängig von zumindest einem Parameter vorgegeben wird. Die Reihenfolge kann alternativ, was nicht Teil der Erfindung ist, insbesondere fest vorgegeben sein und insbesondere in einem Speicher im Fahrzeug abgelegt oder abgespeichert sein.

Gemäß einem Schritt 405 wird dann das Fahrzeug in Abhängigkeit der berechneten jeweiligen Verläufe der mehreren Stellgrößen gesteuert, während das Fahrzeug die Fahrstrecke befährt oder während die Fahrzeit abläuft.

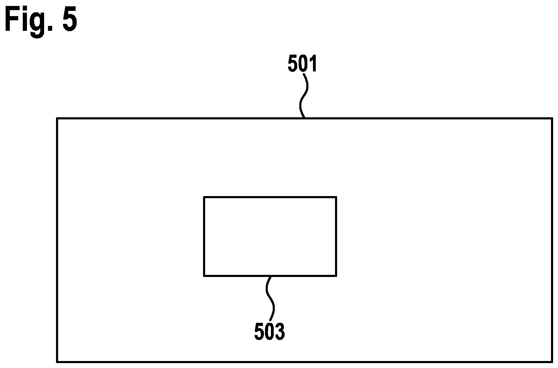

Figur 5 zeigt ein Fahrerassistenzsystem 501.

Das Fahrerassistenzsystem 501 umfasst eine Verarbeitungseinrichtung 503, die dazu eingerichtet ist, das Verfahren zum Betreiben eines Fahrzeugs durchzuführen.

Der Kern der Erfindung liegt also insbesondere darin, dass mittels einer sequenziellen Optimierung in bestimmter Reihenfolge entlang der Achsen der Kostenkarte zwar eine suboptimale Lösung gefunden wird, diese aber immer noch mit hoher Wahrscheinlichkeit nahe am globalen Optimum liegt und dabei eine notwendige Rechenzeit massiv reduziert.

Zum Bestimmen des optimalen Verlaufs der Stellgrößen eines Fahrzeugs wird unter Zuhilfenahme einer Fahrzeugbetriebskostenfunktion eine Kostenkarte aufgebaut. Die Kostenkarte beschreibt insbesondere einen Verbrauch an Fahrzeugantriebsenergie des Fahrzeugs über dem Ort entlang einer vor dem Fahrzeug vorausliegenden Fahrstrecke. Alternativ oder zusätzlich kann die Kostenkarte auch über der Zeit der vor dem Fahrzeug liegenden künftigen Fahrzeit erstellt werden. Jedes Element der Kostenkarte (Verbrauchswerte) beschreibt dabei einen Verbrauch an Fahrzeugantriebsenergie für das Befahren eines kurzen, endlichen Streckenabschnitts und/oder einer kurzen endlichen Betriebszeit. Besonders vorteilhaft ist jedoch die Bestimmung über dem Ort.

Die Orts- oder Zeitachse stellt die erste Dimension der Kostenkarte dar. Die Fahrzeugbetriebskostenfunktion, mit der die Kostenelemente (Verbrauchswerte) der Kostenkarte bestimmt werden, kann dabei neben der unmittelbar zu optimierenden Verbrauchsgröße (zum Beispiel: Treibstoffverbrauch, also Verbrauch an Fahrzeugantriebsenergie) auch beispielsweise zusätzliche Aspekte in Form von Kosten berücksichtigen wie zum Beispiel Bestrafungsterme für Fahrzeitverlängerung oder für den Fahrer sehr unkomfortable Geschwindigkeitsänderungen (sogenannte Nebenbedingungen).

Die weiteren Achsen der Kostenkarte stellen bestimmte Stellgrößen dar, die Einfluss auf das Fahrzeugverhalten und die Fahrkosten haben, wie zum Beispiel die Fahrzeuggeschwindigkeit an einem bestimmten Ort oder zu einer bestimmten Zeit. Dabei kann eine solche Stellgröße entweder eine kontinuierlich beeinflussbare Größe wie zum Beispiel eine Geschwindigkeit oder eine diskrete Stellgröße wie zum Beispiel ein einlegbarer Gang des Fahrzeuggetriebes sein. Kontinuierlich beeinflussbare Größen müssen zur Darstellung in der Kostenkarte jedoch in eine endliche Anzahl diskreter Zustände diskretisiert werden.

Die Kostenkarte ist im einfachsten Fall ein nur zweidimensionales Gebilde, bei dem die erste Dimension zum Beispiel den Ort des Fahrzeugs auf einem vorausliegenden Streckenabschnitt darstellt und die zweite Dimension die Fahrzeuggeschwindigkeit. Die Kosten werden somit in den diskreten Elementen der zweidimensionalen Karte mittels der Fahrzeugbetriebskostenfunktion ermittelt und eingetragen, mittels eines Optimierungsverfahrens wird der kostenminimale Verlauf in der Kostenkarte bestimmt und nach dessen Bestimmen der optimale Geschwindigkeitsverlauf für das Fahrzeug ermittelt.

## Patentansprüche

1. Verfahren zum Betreiben eines Fahrzeugs, umfassend die folgenden Schritte:
- Bereitstellen (401) einer mehrdimensionalen analytischen Fahrzeugbetriebskostenfunktion, die eine Abhängigkeit eines Verbrauchs einer Fahrzeugantriebsenergie von einer vor dem Fahrzeug vorausliegenden Fahrstrecke oder einer vor dem Fahrzeug vorausliegenden Fahrzeit sowie von mehreren Stellgrößen definiert,
- Berechnen (403₁) eines Verlaufs einer Stellgröße der mehreren Stellgrößen, wobei der Verlauf die Fahrzeugbetriebskostenfunktion für die vorausliegende Fahrstrecke oder für die vorausliegende Fahrzeit minimiert, wobei für die Berechnung des Verlaufs die restlichen Stellgrößen konstant gehalten werden,
- wiederholtes Berechnen (403₂, 403₃, ..., 403ᵢ) von weiteren jeweiligen Verläufen der mehreren Stellgrößen, wobei der jeweilige Verlauf einer Stellgröße der mehreren Stellgrößen die Fahrzeugbetriebskostenfunktion für die vorausliegende Fahrstrecke oder für die vorausliegende Fahrzeit minimiert, wobei für die Berechnung des jeweiligen Verlaufs die Stellgrößen gemäß den zuvor entsprechend berechneten Verläufen vorgegeben sind und die restlichen Stellgrößen konstant gehalten werden,
- Steuern (405) des Fahrzeugs in Abhängigkeit der berechneten jeweiligen Verläufe der mehreren Stellgrößen, während das Fahrzeug die Fahrstrecke befährt oder während die Fahrzeit abläuft, **dadurch gekennzeichnet, dass**
- eine Reihenfolge, in welcher die Verläufe berechnet werden, abhängig von zumindest einem Parameter vorgegeben wird.

2. Verfahren nach Anspruch 1, wobei abhängig von einem weiteren Parameter ermittelt wird, für welche Stellgrößen ein entsprechender Verlauf berechnet wird und für welche nicht.

3. Verfahren nach Anspruch 1 oder 2, wobei der Parameter und der weitere Parameter aus der folgenden Gruppe von Stellgrößen ausgewählt werden: Fahrzeuggeschwindigkeit, Getriebezustand, Gang, Ladungszustand einer Fahrzeugbatterie, Lastaufteilung zwischen einem Verbrennungs- und einem Elektromotor bei einem Hybridfahrzeug, Straßenklasse, Steigung, Gefälle, Ort, Fahrzeugmasse, Verkehrsfluss, Gewichtungsfaktoren, die jeweils definieren welche Stellgrößenvariation welche Auswirkung auf die Fahrzeugbetriebskostenfunktion aufweist,

4. Verfahren nach einem der vorherigen Ansprüche, wobei der Parameter und/oder der weitere Parameter von einem Navigationssystem bereitgestellt werden.

5. Verfahren nach einem der vorherigen Ansprüche, wobei der Schritt des Bereitstellens folgenden Schritt umfasst:
- Berechnen des Verbrauchs der Fahrzeugantriebsenergie ausschließlich für diejenigen Werte der Stellgrößen, die plausibel zu einem vorgegebenen physikalischen Fahrzeugmodell und/oder zu einem vorgegebenen physikalischen Umgebungsmodell sind.

6. Verfahren nach einem der vorherigen Ansprüche, wobei der Schritt des Bereitstellens folgenden Schritt umfasst:
- Durchführen einer Berechnung des Verbrauchs der Fahrzeugantriebsenergie für die Werte der Stellgröße, deren Verlauf momentan für die Minimierung der Fahrzeugbetriebskostenfunktion berechnet werden soll, erst dann, wenn definiert ist, welcher Verlauf momentan berechnet werden soll.

7. Computerprogrammprodukt mit Programmcodemitteln zur Durchführung des Verfahrens nach einem der vorherigen Ansprüche, wenn das Computerprogrammprodukt auf einer Verarbeitungseinrichtung (503) abläuft oder auf einem computerlesbaren Datenträger gespeichert ist.

8. Fahrerassistenzsystem (501) mit einer Verarbeitungseinrichtung (503), die dazu eingerichtet ist, das Verfahren nach einem der Ansprüche 1 bis 6 durchzuführen.

## Claims

1. Method for operating a vehicle, comprising the following steps:
- making available (401) a multi-dimensional analytical vehicle operating cost function which defines a dependence of consumption of vehicle drive energy by a route lying ahead of the vehicle or an upcoming travel time of the vehicle as well as of a plurality of manipulated variables,
- calculating (403₁) a profile of a manipulated variable of the plurality of manipulated variables, wherein the profile minimizes the vehicle operating cost function for the route lying ahead or for the upcoming travel time, wherein the remaining manipulated variables can be kept constant for the calculation of the profile,
- repeated calculation (403₂, 403₃, ..., 403ᵢ) of further respective profiles of the plurality of manipulated variables, wherein the respective profile of one manipulated variable of the plurality of manipulated variables minimizes the vehicle operating cost function for the route lying ahead or for the upcoming travel time, wherein for the calculation of the respective profile the manipulated variables are predefined in accordance with the correspondingly previously calculated profiles and the remaining manipulated variables are kept constant,
- controlling (405) the vehicle as a function of the respective calculated profiles of the plurality of manipulated variables while the vehicle is travelling along the route or while the travel time elapses, **characterized in that**
- a sequence in which the profiles are calculated is predefined as a function of at least one parameter.

2. Method according to Claim 1, wherein, as a function of one further parameter it is determined for which manipulative variables a corresponding profile is calculated and for which it is not calculated.

3. Method according to Claim 1 or 2, wherein the parameter and the further parameter are selected from the following group of manipulated variables: vehicle speed, state of transmission, gear, state of charge of the vehicle battery, load distribution between internal combustion engine and an electric motor in a hybrid vehicle, class of road, positive gradient, negative gradient, location, mass of vehicle, traffic flow, weighting factors which respectively define which manipulated variable variation has what effect on the vehicle operating cost function.

4. Method according to one of the preceding claims, wherein the parameter and/or the further parameter are made available by a navigation system.

5. Method according to one of the preceding claims, wherein the making available step comprises the following step:
- translating the consumption of the vehicle drive energy exclusively for those values of the manipulated variables which are plausible for a predefined physical vehicle model and/or for a predefined physical model of the surroundings.

6. Method according to one of the preceding claims, wherein the making available step comprises the following step:
- carrying out a calculation of the consumption of the vehicle drive energy for the values of the manipulated variable whose profile is to be currently calculated for the minimization of the vehicle operating cost function only when it is defined which profile is to be currently calculated.

7. Computer program product with program code means for carrying out the method according to one of the preceding claims when the computer program runs on a processing device (503) or is stored on a computer-readable data carrier.

8. Driver assistance system (501) with a processing device (503) which is configured to carry out the method according to one of Claims 1 to 6.

## Revendications

1. Procédé, destiné à faire fonctionner un véhicule, comprenant les étapes suivantes, consistant à :
- mettre à disposition (401) une fonction analytique multidimensionnelle de coûts de service du véhicule, qui définit une dépendance une consommation d'une énergie d'entraînement du véhicule par rapport à un trajet à venir pour le véhicule ou à un temps de route à venir pour le véhicule et à plusieurs grandeurs de réglage,
- calculer (403₁) une courbe d'une grandeur de réglage parmi les plusieurs grandeurs de réglage, la courbe minimisant la fonction de coûts de service du véhicule pour le trajet à venir ou pour le temps de route à venir, pour le calcul de la courbe, les grandeurs de réglage restantes étant maintenues constantes,
- recalculer (403₂, 403₃, ..., 403ᵢ) des courbes respectives supplémentaires des plusieurs grandeurs de réglage, la courbe respective d'une grandeur de réglage parmi les plusieurs grandeurs de réglage minimisant la fonction de coûts de service du véhicule pour le trajet à venir ou pour le temps de route à venir, pour le calcul de la courbe respective, les grandeurs de réglage étant prédéfinies selon les courbes calculées précédemment en correspondance et les grandeurs de réglage restantes étant maintenues constantes,
- piloter (405) le véhicule en fonction des courbes respectives calculées des plusieurs grandeurs de réglage, pendant que le véhicule parcourt le trajet ou pendant que s'écoule le temps de route, **caractérisé en ce que**
- une séquence pendant laquelle les courbes sont calculées est prédéfinie en fonction d'au moins un paramètre.

2. Procédé selon la revendication 1, dans lequel il est déterminé en fonction d'un paramètre supplémentaire pour quelles grandeurs de réglage sera calculée une courbe correspondante et pour lesquelles celle-ci ne sera pas calculée.

3. Procédé selon la revendication 1 ou 2, le paramètre et le paramètre supplémentaire étant sélectionnés dans le groupe suivant de grandeurs de réglage : vitesse du véhicule, état de la boîte de vitesses, vitesse passée, état de charge d'une batterie du véhicule, répartition de la charge entre un moteur thermique et un moteur électrique sur un véhicule hybride, classe de route, montée, inclinaison, lieu, masse du véhicule, flux du trafic, coefficients de pondération qui définissent respectivement quelle variation des grandeurs de réglage présente quel effet sur la fonction de coûts de service du véhicule.

4. Procédé selon l'une quelconque des revendications précédentes, le paramètre et/ou le paramètre supplémentaire étant mis à disposition par un système de navigation.

5. Procédé selon l'une quelconque des revendications précédentes, l'étape de la mise à disposition comprenant l'étape suivante consistant à :
- calculer la consommation d'énergie d'entraînement du véhicule exclusivement pour les valeurs des grandeurs de réglage qui sont plausibles pour un modèle physique de véhicule prédéfini et/ou pour un modèle physique d'environnement prédéfini.

6. Procédé selon l'une quelconque des revendications précédentes, l'étape de la mise à disposition comprenant l'étape suivante consistant à :
- procéder à un calcul de la consommation de l'énergie d'entraînement du véhicule pour les valeurs de la grandeur de réglage, dont la courbe est censée être calculée momentanément pour la minimisation de la fonction de coûts de service du véhicule une fois seulement qu'il a été défini quelle courbe est censée être momentanément calculée.

7. Produit de programme informatique, pourvu de moyens de codes programmes, destiné à réaliser le procédé selon l'une quelconque des revendications précédentes, lorsque le produit de programme informatique s'exécute sur un système de traitement (503) ou est mémorisé sur un support de données lisible par ordinateur.

8. Système d'assistance du conducteur (501) pourvu d'un système de traitement (503), qui est aménagé pour réaliser le procédé selon l'une quelconque des revendications 1 à 6.
